# FASCICULE DE BREVET EUROPEEN

(11) **EP 0 750 147 B1**
(45) Date de publication et mention de la délivrance du brevet: **16.05.2001**
(21) Numéro de dépôt: 96401300.7
(22) Date de dépôt: 14.06.1996
(51) Int. Cl.: F16K 31/60

(54) **Robinet à volant élastique**
Elastischer Ventilhandgriff
Elastic valve handle

(30) Priorité: 19.06.1995 FR 9507309
(43) Date de publication de la demande: 27.12.1996
(73) Titulaire: LA SPIROTECHNIQUE INDUSTRIELLE ET COMMERCIALE, 06510 Carros (FR)
(72) Inventeur: Reynaud, Philippe, 06560 Valbonne (FR); D'Armancourt, Benoît, 92190 Meudon (FR)
(74) Mandataire: Sueur, Thierry

(56) Documents cités:
- EP-A- 0 608 523
- DE-A- 2 255 549
- DE-B- 1 032 994
- FR-A- 1 478 003
- GB-A- 1 367 367

## Description

La présente invention concerne les robinets, notamment de commande de distribution de gaz, en particulier de bouteilles de plongée sous-marine, du type comprenant un clapet couplé à une extrémité profilée d'une tige déplaçable en rotation par un volant ayant un moyeu monté sur l'autre extrémité de la tige.

Un robinet de ce type, à volant en matériau rigide retenu à l'extrémité de la tige, est décrit dans le document DE-A-1032994.

Dans les robinets de bouteilles de plongée connus, le volant, réalisé en matériau rigide, est accouplé à l'extrémité extérieure de la tige par l'intermédiaire d'un ressort coaxial à la tige et d'un écrou monté sur une extrémité filetée de la tige qui règle le tarage de ce ressort.

La présente invention a pour objet de proposer un robinet de structure et de montage simplifiés, de coûts réduits et convenant à des utilisations en environnement sévère, notamment en milieu sous-marin.

Pour ce faire, selon l'invention, le volant comprend un moyeu déformable et le robinet comporte des moyens d'accouplement sous compression du moyeu à ladite autre extrémité de la tige.

Selon d'autres caractéristiques preferées de l'invention :
- le volant comprend une âme transversale enfilée sur la tige et en appui avec une face axiale du moyeu, les moyens d'accouplement comprenant un écrou vissé sur l'autre extrémité de la tige et ayant un épaulement en appui sur l'autre face axiale du moyeu;
- la tige tourillonne dans un palier monté dans une extrémité d'un corps de robinet, ce dernier comportant une rondelle anti-friction interposée entre l'âme du volant et ledit palier.

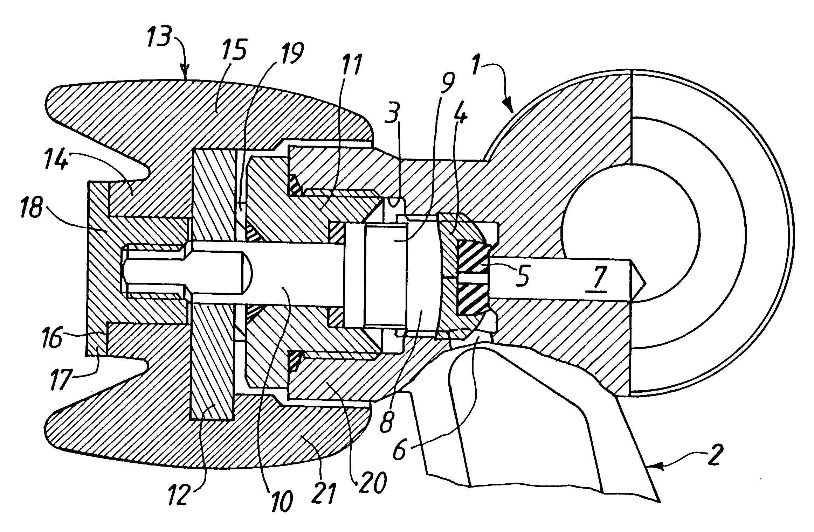

D'autres caractéristiques et les avantages de la présente invention ressortiront de la description suivante d'un mode de réalisation, donné à titre illustratif mais nullement limitatif, faite en relation avec le dessin annexé, sur lequel la planche unique est une vue partielle, partiellement en coupe longitudinale, d'une structure de robinet selon l'invention.

Sur la figure unique, on reconnaît un corps de robinet 1 comprenant une embase 2 destinée à être montée, typiquement, sur un réservoir de gaz sous pression et comprenant un logement interne 3 dans lequel est disposé coaxialement un clapet 4 susceptible de coopérer avec un siège 5 pour commander une communication entre un passage de gaz 6 provenant du réservoir et un passage de gaz 7 communiquant avec un appareil utilisateur (non représenté), formés dans le corps 1.

Le clapet 4 comporte un filetage extérieur coopérant avec un taraudage du logement 3 et une découpe avant 8 dans laquelle est reçue une extrémité en forme de lame 9 d'une tige 10 d'actionnement en rotation du clapet 4 pour l'approcher ou l'éloigner du siège 5 par rotation dans son taraudage.

La tige 10 comporte une partie de fût principale tourillonnant dans un palier 11 vissé dans l'ouverture d'accès du logement 3 formé dans une zone d'extrémité cylindrique 20 du corps 1. Sur une partie intermédiaire à profil anguleux de la tige 10 est enfilée une barrette ou une rondelle crénelée 12 formant âme montée, de façon également à ne pouvoir tourner par rapport à ce dernier, dans un volant cylindrique en matériau élastomère 13 comportant une partie de moyen central 14 formant un épaulement radial interne 15 en appui axial avec la barrette 12 et un épaulement annulaire arrière 16 contre lequel vient porter la tête 17 d'un écrou 18 vissé sur l'extrémité arrière filetée de la tige 10. Une rondelle anti-friction 19 est interposée entre la face avant de la barrette 12 et la face arrière du palier 11. De la sorte, en vissant l'écrou 18 sur la tige 10, il se produit, par compression, une déformation tant axiale que radiale du moyeu 14 assurant la parfaite solidarisation, sans jeu angulaire ou axial entre le volant 13 et la tige d'actionnement 10 par ailleurs étanchéifiée par des joints toriques vis-à-vis du palier 11, lui-même étanchéifié par un joint torique vis-à-vis du boîtier 1. Avantageusement, comme représenté, le clapet 4 est composite et comporte un corps métallique avec un insert en matériau élastomère dur coopérant avec le siège 5. Le volant 13 comporte une partie d'extrémité en forme de jupe 21 entourant à recouvrement la tête de palier 11 et la partie d'extrémité cylindrique 20 du corps 1.

Quoique la présente invention ait été décrite en relation avec un mode de réalisation particulier, elle ne s'en trouve pas limitée pour autant mais est au contraire susceptible de modifications et de variantes qui apparaîtront à l'homme de l'art.

## Revendications

1. Robinet, comprenant un clapet (4) couplé à une extrémité profilée (9) d'une tige (10) actionnable en rotation par un volant (13) ayant un moyeu (14) monté sur l'autre extrémité de la tige, caractérisé en ce que le volant (13) comprend un moyeu déformable (14) et en ce qu'il comporte des moyens (18) d'accouplement sous compression du moyeu à ladite autre extrémité de la tige (10).

2. Robinet selon la revendication 1, caractérisé en ce que le volant comprend une âme transversale (12) enfilée sur la tige (10) et en appui avec une face axiale (15) du moyeu (14), les moyens d'accouplement comprenant un écrou (18) vissé sur l'autre extrémité de la tige (10) et ayant un épaulement (17) en appui sur l'autre face axiale (16) du moyeu (14).

3. Robinet selon la revendication 2, caractérisé en ce que la tige (10) tourillonne dans un palier (11) monté dans une extrémité d'un corps de robinet (1), et en ce qu'il comporte une rondelle anti-friction (19) interposée entre l'âme (12) et le palier (11).

4. Robinet selon la revendication 3, caractérisé en ce que le volant comprend une partie formant jupe (21) recouvrant au moins partiellement ladite extrémité (20) du corps du robinet (1).

5. Robinet selon l'une des revendications précédentes, caractérisé en ce que le volant (13) est formé d'un bloc élastomère moulé.

## Claims

1. Tap, comprising a valve (4) coupled to a profiled end (9) of a rod (10) capable of being actuated in rotation by means of a handwheel (13) having a hub (14) mounted on the other end of the rod, characterized in that the handwheel (13) comprises a deformable hub (14), and in that it comprises means (18) for the compressive coupling of the hub to said other end of the rod (10).

2. Tap according to Claim 1, characterized in that the handwheel comprises a transverse web (12) slipped onto the rod (10) and in bearing contact with one axial face (15) of the hub (14), the coupling means comprising a nut (18) screwed onto the other end of the rod (10) and having a shoulder (17) in bearing contact on the other axial face (16) of the hub (14).

3. Tap according to Claim 2, characterized in that the rod (10) pivots in a bearing (11) mounted in one end of a tap body (1), and in that it comprises an anti-friction washer (19) interposed between the web (12) and the bearing (11).

4. Tap according to Claim 3, characterized in that the handwheel comprises a skirt-forming part (21) at least partially covering said end (20) of the body of the tap (1).

5. Tap according to one of the preceding claims, characterized in that the handwheel (13) is formed from a moulded elastomeric block.

## Patentansprüche

1. Ventil mit einer Ventilklappe (4), die mit einem profilierten Ende (9) einer Stange (10) verbunden ist, welche durch ein eine am anderen Ende der Stange angebrachte Nabe (14) aufweisendes Rad (13) drehbetätigt werden kann, dadurch gekennzeichnet, daß das Rad (13) eine verformbare Nabe (14) aufweist und daß es Mittel (18) zur Verbindung der Nabe mit dem anderen Ende der Stange (10) unter Druck enthält.

2. Ventil nach Anspruch 1, dadurch gekennzeichnet, daß das Rad einen auf die Stange (10) aufgeschobenen Quersteg (12) aufweist, der an einer axialen Fläche (15) der Nabe (14) anliegt, wobei die Verbindungsmittel eine Mutter (18) umfassen, die auf das andere Ende der Stange (10) aufgeschraubt ist und eine an der anderen axialen Fläche (16) der Nabe (14) anliegende Schulter (17) aufweist.

3. Ventil nach Anspruch 2, dadurch gekennzeichnet, daß sich die Stange (10) in einem in einem Ende eines Ventilkörpers (1) angebrachten Lager (11) dreht und daß es eine Antifriktionsscheibe (19) enthält, die zwischen dem Steg (12) und dem Lager (11) angeordnet ist.

4. Ventil nach Anspruch 3, dadurch gekennzeichnet, daß das Rad einen eine Schürze (21) bildenden Teil aufweist, der das Ende (20) des Körpers des Ventils (1) zumindest teilweise bedeckt.

5. Ventil nach einem der vorhergehenden Ansprüche, dadurch gekennzeichnet, daß das Rad (13) aus einem geformten elastomeren Block besteht.
